# EUROPÄISCHE PATENTSCHRIFT

(11) **EP 1 860 044 B1**
(45) Veröffentlichungstag und Bekanntmachung des Hinweises auf die Patenterteilung: **14.10.2009**
(21) Anmeldenummer: 07010208.2
(22) Anmeldetag: 23.05.2007
(51) Int. Cl.: B65G 57/00

(54) **Vorrichtung und Verfahren zum Handhaben von Paletten in - und ausserhalb einer Palettierzelle**
Device and method for handling pallets inside and outside a palletting cell
Dispositif et procédé destinés à la manipulation de palettes à l'intérieur et à l'extérieur d'une cellule de mise en palette

(30) Priorität: 24.05.2006 DE 102006024900
(43) Veröffentlichungstag der Anmeldung: 28.11.2007
(73) Patentinhaber: Winkler + Dünnebier Aktiengesellschaft, 56562 Neuwied (DE)
(72) Erfinder: Salm, Thomas, Dr.- Ing., 52074 Aachen (DE); Kutsch, Bernfried, Dipl.-Ing., 52224 Stolberg (DE)

(56) Entgegenhaltungen:
- DE-U1- 8 501 637
- FR-A1- 2 331 499
- GB-A- 1 221 367

## Beschreibung

### I. Anwendungsgebiet

Die vorliegende Erfindung betrifft eine Vorrichtung zum Handhaben von Paletten in und außerhalb einer Palettierzelle zum Anordnen von Gegenständen auf Paletten gemäß dem Oberbegriff des Anspruchs 1. Bei den auf den Paletten anzuordnenden Gegenständen kann es sich im Sinne der Erfindung insbesondere um In Schachteln oder sonstige Behältnisse verpackte Produkte handeln, wie etwa in Schachteln verpackte Briefhüllen.

### II. Technischer Hintergrund

Es ist bekannt, automatische Pafettiervorrichtungen, sogenannte Palettierzellen, in Zusammenhang mit Briefhüllenherstellungsmaschinen einzusetzen. Dabei werden die am Ende der Briefhüllsnherstellungsmaschlne ausgeworfenen, fertigen Briefhüllen zunächst einer automatischen Verpackungsvorrichtung zugeführt und in Schachteln transportsicher verpackt. Dem Verpackungsautomaten ist eine Palettierzelle nachgeschaltet, die einen Palettierroboter, wenigstens eine Vorrichtung zum Wechseln der Paletten und Bereiche zum Bevorraten von Paletten und Zwischenlagen umfasst.
Der Palettierroboter übernimmt die von dem Verpackungsautomaten kommenden Verpackungsschachteln und ordnet sie in einer platzsparenden und für den Transport stabilen Art und Weise auf einer Palette an, die zu diesem Zweck an einem dafür vorgesehenen Beladeplatz bereitgehalten wird.

Sobald eine Palette vollständig mit Verpackungsschachteln beladen ist, muss sie zur Fortsetzung des Palettiervorgangs von dem Beladeplatz zu einem Abholplatz transportiert werden.
Hierzu sind Vorrichtungen bekannt, die volle Paletten mittels fest Installierter, herkömmlicher Rollen- und/oder Kettenfördermitteln von dem Beladeplatz zu einem Abholplatz transportieren, von welchem sie beispielsweise mit Hilfe eines Flurförderfahrzeugs oder eines Hubwagens abgeholt werden können.
Diese Vorrichtungen haben folgende Nachteile:
- Die Rollen- oder Kettenförderer ragen in der Regel aus der Palettierzelle heraus, dadurch ist der Platzbedarf der Palettierzelle relativ groß
- Die Förderer können nur Paletten mit Bodenbrettem transportieren wie z.B. Europaletten mit Längsbodenbrettern
- Die Verwendung eines Hubwagens zum Abtransport ist nur möglich, wenn die Förderer niedrig genug gebaut sind, entsprechende Aussparungen vorhanden sind, In die die Gabeln des Hubwagens eingefahren werden können und die Palette keine Querbodenbretter aufweist, wie z.B. eine Europalette.
- Der Ranggierplatz in Förderrichtung muss verhältnismäßig groß sein, um die Palette abtransportieren zu können

Aus der DE 10305095 ist eine Vorrichtung zum Wechseln von vollen Paletten in einem Palettlerautomaten bekannt, die volle Palette mit einem Transferwagen von dem Beladeplatz zum Abholplatz transportiert. Der Transferwagen, mit der vollen Palette, ragt nur so lange aus der Maschine, bis die volle Palette von dem Abholplatz abgeholt wird.
Diese Vorrichtung hat folgende Nachteile:
- Die Bauhöhe ist relativ hoch, so dass die volle Palette von einem Flurförderfahrzeug abgeholt werden muss
- auf dem Abstellplatz kann nur eine Palette abgestellt werden, so dass die Palettierung gestoppt werden muss, wenn eine erste Palette auf dem Abstellplatz steht und eine Zweite fertig beladen ist.
- die mögliche Stapelhöhe der Gegenstände auf den Paletten ist durch die Hubhöhe des Palettierroboters bzw. der Deckenhöhe begrenzt.

Aus der FR 2 331 499 ist eine Vorrichtung zum Handhaben von Paletten in- und außerhalb einer Palettierzelle gemäß dem Oberbegriff des Anspruchs 1 bekannt.

### III. Darstellung der Erfindung

### a) Technische Aufgabe

Es ist daher die Aufgabe der vorliegenden Erfindung, eine Vorrichtung zum automatischen Handhaben von Paletten in-und außerhalb einer Palettierzelle zum Anordnen von Gegenständen auf den Paletten zu schaffen, die, der bzw. das keine festen Bautelle außerhalb der Palettierzelle aufweißt und die oben genannten Nachteile nicht besitzt.

### b) Lösung der Aufgabe

Diese Aufgabe wird mittels einer Vorrichtung mit den Merkmalen des Anspruchs 1 gelöst. Weitere Ausgestaltungen der vorliegenden Erfindung ergeben sich aus den Unteransprüchen.

Die Transportvorrichtung ist ein mit einem Antrieb versehener Wagen, der in linearer Richtung, frei und automatisch gesteuert, hin und her fahren kann.
Erfindungsgemäß fährt die Transporteinrichtung dabei mindestens von einem Warteplatz zu einem Beladeplatz, in der Palettierzelle, und von da weiter zu einem Abstellplatz, der entweder direkt neben der Schutzeinrichtung der Palettierzelle liegt oder aber auch in einem größeren Abstand zur Palettierzelle liegen kann, insbesondere dann, wenn ein Speicher mit mehreren Paletten hintereinander gebildet werden soll.

Innerhalb der Palettierzelle wird die Transporteinrichtung in einer Führungsvorrichtung in Form von Führungsschienen, oder einer Führungsnut im Boden, geführt.

Die Transport- und Hubvorrichtung besteht im Wesentlichen aus einer hinten angeordneten Antriebseinheit und einer vorne angeordneten Hubvorrichtung, die zusammen mit der Transporteinrichtung verfahrbar ist.
Die Hubvorrichtung besteht im Wesentlichen aus einer Hubgabel die in der Lage ist, Paletten aller Art längs und quer aufzunehmen, anzuheben und abzusetzen.

Durch das Handhaben der Paletten in der Palettierzelle mit der Hub- und Transportvorrichtung ist es nun auch möglich Stapelpaletten mit 4-9 Füßen zu verwenden, die auf einer Rollenbahn nicht transportiert werden können. Denn für den Transport auf einer Rollenbahn müssen die Paletten in Transportrichtung mit Längsbodenbrettern versehen sein.

Der Warteplatz und der Beladeplatz sind so weit voneinander beabstandet, dass eine neue Palette von dem Palettierroboter frei auf Flurhöhe abgestellt werden kann. So ist es in vorteilhafter Weise möglich eine auf Flurhöhe stehende Palette mit Längs- und/oder Querbrettern in Längs- und Querrichtung mit der Hub- und Transporteinrichtung aufzunehmen bzw. zu handhaben.

Ist die lichte Höhe der Halle in der die Palettierzelle stehen soll, für den gewünschten Hub des Palettierroboters zu gering, bietet die Hub- und Transporteinrichtung den besonderen Vorteil, einen Teil der des notwendigen Hubs zur Erstellung einer geforderten Stapelhöhe, auszuführen.
Eine neue Palette, z.B Europalette in Längsrichtung oder Stapelpalette, kann hierzu von dem Palettierroboter direkt auf die angehobene Gabel der Hub- und Transporteinrichtung abgelegt werden, oder es besteht die Möglichkeit eine über dem Beladeplatz von dem Palettierroboter bereitgestellte Paletten mit der Hub- und Transporteinrichtung aufzunehmen, indem diese mit der Hubgabel zwischen die Deckbretter und die Bodenbretter eintaucht, die Hub- und Transporteinrichtung also von dem Warteplatz zum Beladeplatz fährt.

Die Palette wird dann von der Hub- und Transporteinrichtung erst auf den Boden abgestellt, wenn die ersten Schichten mit Schachteln so hoch auf der Palette gestapelt sind, dass der fehlende Hub des Palettierroboters ausgeglichen ist.

Die Hubvorrichtung kann dafür mit einem einfachem Pneumatikzylinder, der festgelegte Höhen anfahren kann oder mit z.B. einem Servomotor angetrieben werden, mit dem dann jede beliebige Position angefahren werden kann.

Eine neue Palette muss aber nicht zwingend von dem Palettierroboter zum Beladeplatz transportiert werden, sondern sie kann auch mit der Hub- und Transporteinrichtung von einem Abstellplatz oder einem Regal außerhalb der Palettierzelle abgeholt werden.

Ist eine Palette beladen, wird sie von der Hub- und Transporteinrichtung, sofern noch erforderlich, aufgenommen und von dem Palettierplatz zu einem Abstellplatz gefahren. Der Abstellplatz kann eine Fläche direkt vor der Palettierzelle, ein Pufferbereich oder Palettenspeicherplatz In Fahrrichtung der Hub- und Transporteinrichtung, eine Abstellfläche auf einem z.B. schienengebundenen Wagen oder eine Regalfläche sein. So ist es z.B. auch möglich, dass direkt vor der Palettierzelle oder in einem größerem Abstand zu dieser, ein Regal aufgestellt ist, aus dem die Hub- und Transporteinrichtung unten eine leere Palette abholen und oben eine volle Palette abstellen kann, die dann von einem Flurförderfahrzeug abgeholt werden kann.

Weitere Merkmale gehen aus den Unteransprüchen und der Beschreibung im Zusammenhang mit den Zeichnungen hervor.

### c) Ausführungsbeispiele

Nachfolgend werden Ausführungsformen der vorliegenden Erfindung beispielhaft anhand der beigefügten Zeichnungen beschrieben.
Es zeigen:
- Fig. 1:: Seitenansicht einer Palettierzelle mit der Hub- und Transporteinrichtung
- Fig. 2:: Draufsicht auf die Palettierzelle
- Fig. 3-5:: Ansichten zur Darstellung verschiedener Betriebszustände

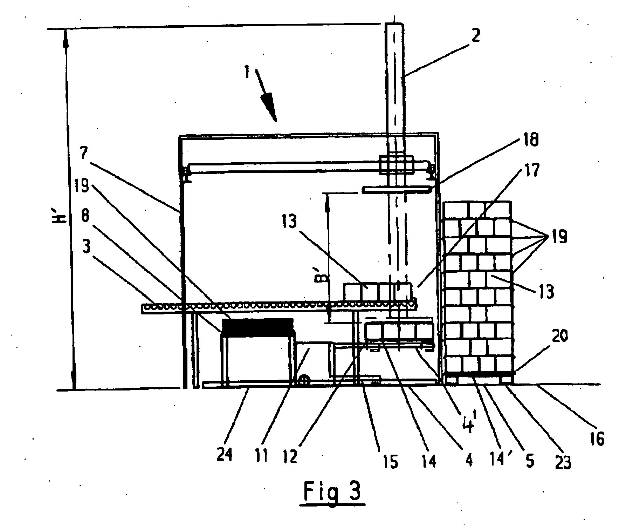

Fig. 3: Hub- und Transportvorrichtung mit angehobener Palette auf dem Palettlerplatz

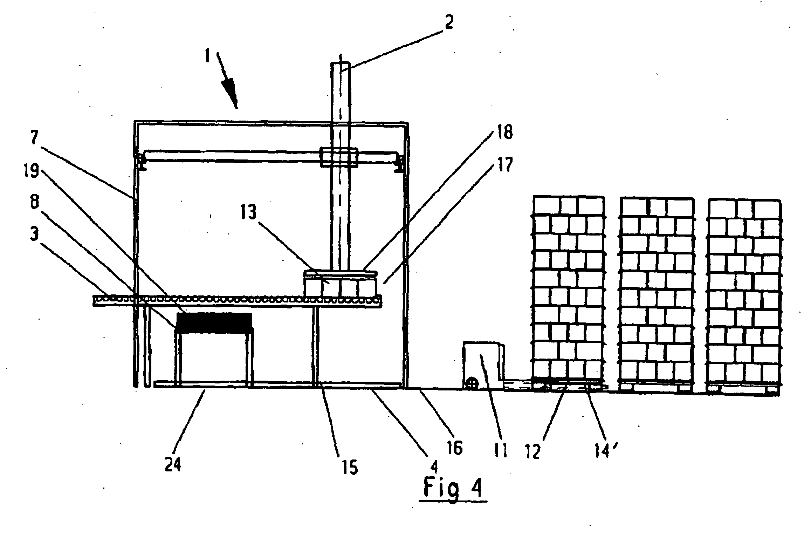

Fig. 4: Palettierzelle mit mehreren vollen Paletten im Abstellbereich

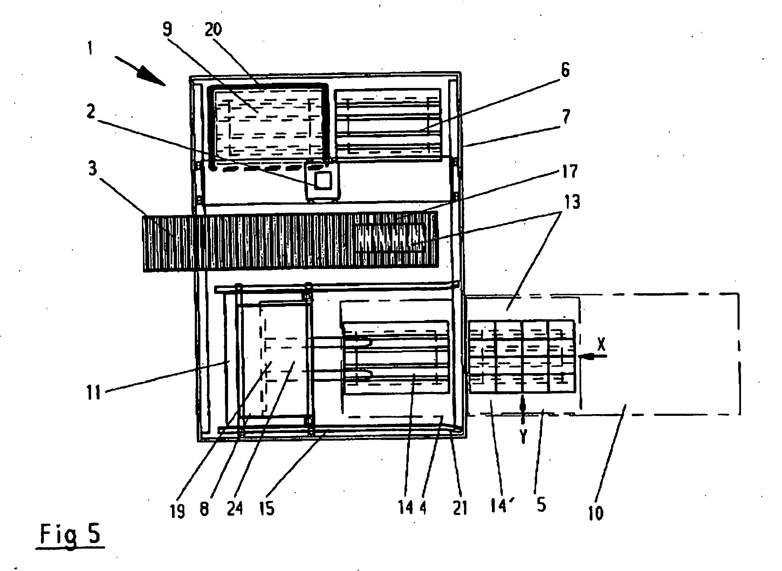

Fig. 5: Palette alternativ ausgerichtet

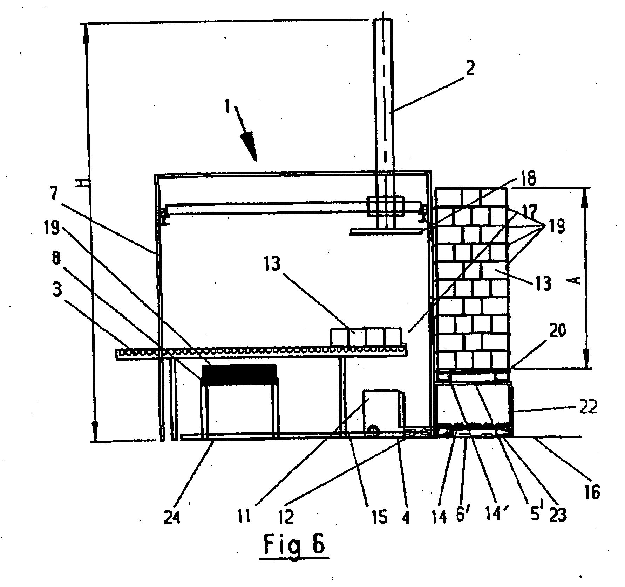

Fig. 6: Palettenregal vor der Palettierzelle

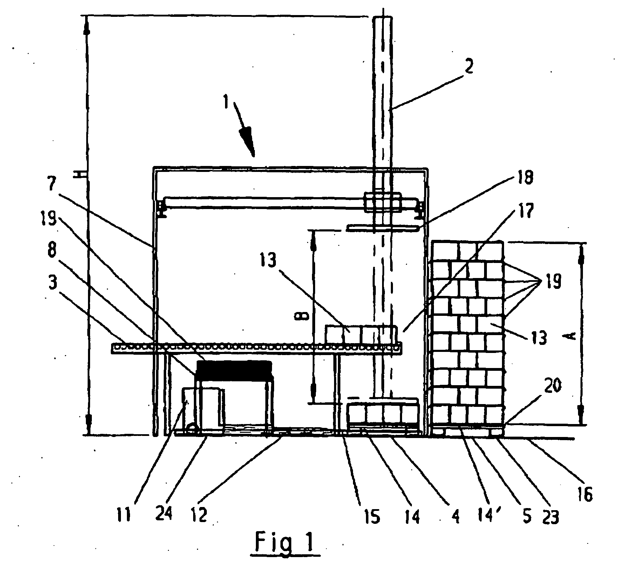

Die Fig. 1 zeigt die Seitenansicht einer Palettierzelle 1. Die gepackten Gegenstände, z.B. Schachteln 13, werden über eine Rollenbahn 3 von einem nicht dargestellten Verpackungsautomaten kommend, zur Sammelstelle 17 der Rollenbahn 3 transportiert. Sobald sich eine bestimmte Anzahl von Schachteln 13 angesammelt hat, werden die Schachteln 13 von der Greifvorrichtung 18 des Palettierroboters 2 übernommen und entsprechend der gewünschten Position auf der an dem Beladeplatz 4 bereitstehenden Palette 14 abgesetzt. Dabei kann die Position der Schachteln 13 zueinander von Lage zu Lage wechseln. Für den Transport Ist es zudem meist erforderlich, dass zwischen Palette 14 und erster Lage eine Unterlage 20 und zwischen den einzelnen Lagen eine Zwischenlage 19 eingebracht wird.
Die Unterlagen 20, wie auch die Zwischenlagen 19, werden ebenfalls mit der Saughebevorrichtung 18 des Palettierroboters 2 von ihrem Vorratsplatz 8,9 aufgenommen und auf die Palette 14 bzw. auf die fertigen Lagen gelegt.
Ist die gewünschte Stapelhöhe A erreicht wird die volle Palette 14 von der Hub- und Transportvorrichtung 11,12 zum Abstellplatz 5 oder in den Abstellbereich 10 außerhalb der Palettierzelle 1 transportiert und abgestellt.

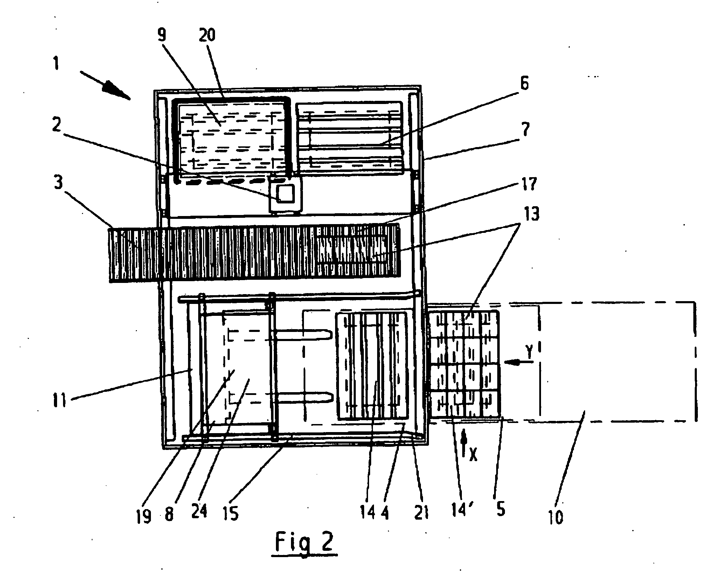

Wie in Fig 1 und 2 zu erkennen ist, kann die Hub- und Transportvorrichtung 11,12, ein im Handel erhältlicher selbstfahrender Hubwagen 11 sein, der entweder über Kabel oder über Funk automatisch von der Steuerung der Palettierzelle 1 gesteuert wird. Wobei die gezeigte Ausführung lediglich eine lineare Transportrichtung erfordert.
Zur Führung der Hub- und Transportvorrichtung 11,12 innerhalb der Palettierzelle 1 sind links und rechts Führungsschienen 15 angeordnet. Außerhalb der Pafettierzelle 1 ist keine Führung vorgesehen, so dass auch keine festen Teile aus der Palettierzelle 1 herausragen und stören können, Spurfehler, die bei Fahrten außerhalb der Palettierzelle 1 auftreten, werden beim Zurückfahren in die Palettierzelle 1 mit der an der Führungsvorrichtung angebrachten Zentriervorrichtung 21 ausgeglichen. Alternativ sind auch eine Führung und gesteuerte Systeme wie z.B. Induktionsschleifen oder lasergestützt denkbar, so dass auch Kurvenfahrten ohne störende Bauteile außerhalb der Palettierzelle 1 möglich sind.

In der Aufsicht gemäß Fig. 2 ist eine Palettierzelle 1 mit den darin platzierten Vorrichtungen und Plätzen gezeigt. Während die Schachteln 13 auf der Rollenbahn 3 an der Sammelstelle 17 zu einer Reihe zusammengestellt werden, führt der Palettierroboter 2 verschiedene Tätigkeiten durch. Dazu gehört zum einen der Transport einer neuen Palette 14 von dem Palettenspeicherplatz 6 zum Palettierplatz 4 und der Transport einer entsprechenden Folie und/oder Zwischenlage 19 aus Papier oder Pappe von den entsprechenden Vorratsplätzen 8,9 auf die Palette 14 am Palettierplatz 4. Und zum anderen das Auflegen von Zwischenlagen 19 auf eine fertig gepackte Lage zur Stabilisierung des Stapels. Ist die Palette 14 voll, wird die volle Palette 14 von der Hub- und Transporteinrichtung 11,12 von der Flurebene 16 aufgenommen und zum Abstellplatz 5 transportiert und auf der Flurebene 16 abgestellt. Bei der hier dargestellten Ausrichtung kann die volle Palette 14 quer zur Ausfahrrichtung, in X Richtung, mit einen Hubwagen abtransportiert werden.
Die hier gezeigte Ausrichtung der Palette 14 und der Speicher für Unter 9 und Zwischenlagen 8 ist nur beispielhaft dargestellt, diese können auch um 90° gedreht oder anders platziert angeordnet sein, je nach der gewünschten Dimensionierung der Palettierzelle 1.

In Fig. 3 ist die erfindungsgemäße Vorrichtung gezeigt wie gerade die zu beladene Palette 14 um 3 Lagen angehoben und die unterste Lage Schachteln 13 positioniert ist. Durch das Anheben der Palette 14 wird der benötigte Hub B' des Palettierroboters 2 besonders vorteilhaft verringert, so dass die notwendige lichte Hallenhöhe H' niedriger sein kann, ohne dass die mögliche Stapelhöhe A verringert werden muss.

In Fig. 4 ist eine weitere vorteilhafte Funktion der Erfindung gezeigt, nämlich die Bildung einer Reihe mit vollen Paletten 14 außerhalb der Palettierzelle 1. Dazu nimmt die Hub- und Transportvorrichtung 11,12 eine volle Palette 14 auf und fährt mit dieser mindestens so weit aus der Palettierzelle 1 heraus, dass zwischen die Palettierzelle 1 und der ersten abgestellten Palette mindestens eine weitere Palette abgestellt werden kann. Auch ist es möglich, die Palettenreihe in einem größeren Abstand zur Palettierzelle 1 innerhalb eines Palettenabstellbereiches 10 abzustellen. Außerhalb der Palettierzelle 1 ist die Hub- und Transportvorrichtung 11,12 nicht in der Führungsvorrichtung 15 geführt, so dass auch keine störenden Bauteile aus der Patettierzelle 1 herausragen.

In Fig 5 ist eine alternative Ausrichtung der Palette 14 auf dem Palettierplatz 4 gezeigt wobei die Speicherplätze nicht gedreht sind. Bei dieser Ausrichtung können z.B. Europaletten in Längsrichtung mit einem Hubwagen oder auch alternativ in Querrichtung mit einem Flurförderfahrzeug abtransportiert werden.

Eine weitere Möglichkeit, die leeren und vollen Paletten 14 zu händeln, ist in Fig 6 gezeigt. Dabei steht ein Regal 22 direkt vor der Palettierzelle 1. In einer unteren Ebene, z.B. Flurebene 16, ist ein Platz für mindestens eine leere Palette 14 und auf der oberen Ebene , Abstellplatz 5', ist ein Platz für eine volle Palette 14' vorgesehen. Wird eine neue leere Palette benötigt, so holt die Hub- und Transportvorrichtung 91,12 eine Palette 14 aus dem unteren Fach ab und bringt diese zum Palettierplatz 4,4'. Sobald die Palette voll ist, wird diese von der Hub- und Transportvorrichtung 11,12 zur oberen Ebene transportiert und auf dem dortigen Abstellplatz 5' abgestellt.

### BEZUGSZEICHENLISTE

- 1: Palettierzelle
- 2: Palettierroboter
- 3: Rollenbahn
- 4,4': Palettierplatz
- 5,5': Abstellplatz
- 6,6': Palettenspeicherplatz
- 7: Schutzeinrichtung
- 8: Vorratsplatz für Zwischenlagen
- 9: Vorratsplatz für Unterlagen
- 10: Abstellbereich
- 11: Hubvorrichtung
- 12: Transporteinrichtung
- 13: Schachteln
- 14,14': volle Palette
- 15: Führungsvorrichtung
- 16: Flurebene
- 17: Sammelstelle
- 18: Greifvorrichtung
- 19: Zwischenlage
- 20: Unterlage
- 21: Zentrier<rarrichtung
- 22: Regal
- 23: Querbretter
- 24: Warteplatz

- A: Stapelhöhe
- B , B': Hub
- H , H': lichte Hallenhöhe
- H: Lagenhöhe
- X: Aufnahme mit Hubwagen
- Y: Aufnahme mit Flurförderfahrzeug

## Patentansprüche

1. Vorrichtung zum Handhaben von Paletten (14) in- und außerhalb einer Palettierzelle (1) zum Anordnen von Gegenständen auf Paletten (14), wobei die Vorrichtung
- eine Hubvorrichtung (11), mittels welcher Paletten (14) vertikal bewegt werden können, sowie
- eine Transporteinrichtung (12), mittels welcher die Hubvorrichtung (11) horizontal verfahren werden kann,
umfasst
**dadurch gekennzeichnet, dass**
die Transporteinrichtung (12) innerhalb der Palettierzelle (1) von einer Führungsvorrichtung (15) geführt ist, wobei die Führungsvorrichtung (15) vollständig innerhalb der Palettierzelle (1) angeordnet ist und über eine Zentriervonichtung (21) verfügt, mit der Spurfehler der Transporteinrichtung, die bei Fahrten außerhalb der Palettierzelle (1) auftreten können, beim Zurückfahren der Transporteinrichtung in die Palettierzelle (1) ausgeglichen werden.

2. Vorrichtung nach Anspruch 1,
**dadurch gekennzeichnet, dass**
die Hub- und Transporteinrichtung (11.12) selbstfahrend und automatisch gesteuert ist.

3. Vorrichtung nach Anspruch 1 oder 2,
**dadurch gekennzeichnet, dass**
die Transporteinrichtung (12) sich linear bewegt.

4. Vorrichtung nach einem der vorangehenden Ansprüche,
**dadurch gekennzeichnet, dass**
die Hub- und Transporteinrichtung (11,12) wenigstens einen Abstellplatz (5,5') außerhalb der Palettierzelle (1) anfahren kann.

5. Vorrichtung nach einem der vorangehenden Ansprüche,
**dadurch gekennzeichnet, dass**
die Hub- und Transporteinrichtung (11,12) einen Warteplatz (24) vor dem Palettierplatz (4) anfahren kann.

6. Vorrichtung nach einem der vorangehenden Ansprüche,
**dadurch gekennzeichnet, dass**
die Hubvorrichtung (11) die Palette (14,14') mindestens um eine Lagenhöhe (h) vertikal anheben kann.
7. Vorrichtung nach einem der vorangehenden Ansprüche,
**dadurch gekennzeichnet, dass**
die Hubvorrichtung (11) Paletten (14,14') aller Art in Längs- und Querrichtung (X, Y) handhaben kann.

## Claims

1. Device for handling pallets (14) inside and outside of a palletizing cell (1) for the purpose of arranging objects on pallets (14), wherein the device comprises
- a lifting device (11) by way of which pallets (14) can be moved in the vertical direction and
- a transport device (12) by means of which the lifting device (11) can be moved in the horizontal direction
**characterized by**
the transport device (12) being guided inside the palletizing cell (1) by a guide device (15), wherein the guide device (15) is located entirely within the palletizing cell (1) and comprises a centering device (21) with which the tracking error in the transport device, which can arise during travel outside the palletizing cell (1), is corrected when the transport device moves back into the palletizing cell (1).

2. Device in accordance with Claim 1,
**characterized by**
the lifting and transport devices (11, 12) being self-propelled and controlled automatically.

3. Device in accordance with Claim 1 or 2,
**characterized by**
the transport device (12) moving in a linear manner.

4. Device in accordance with one of the claims,
**characterized by**
the lifting and transport devices (11, 12) being able to approach at least one parking position (5, 5') outside the palletizing cell (1).

5. Device in accordance with one of the foregoing claims,
**characterized by**
the lifting and transport devices (11, 12) being able to assume a waiting position (24) in front of the palletizing position (4).

6. Device in accordance with one of the foregoing claims,
**characterized by**
the lifting device (11) being able to raise the pallet (14, 14') vertically by the height of at least one storage layer (h).

7. Device in accordance with one of the foregoing claims,
**characterized by**
the lifting device (11) being able to move all types of pallet (14, 14') in the longitudinal and transverse directions (X, Y).

## Revendications

1. Dispositif destiné à la manutention de palettes (14) à l'intérieur et à l'extérieur d'une cellule de palettisation (1) pour agencer des objets sur des palettes (14), le dispositif comprenant
- un dispositif de levage (11), au moyen duquel des palettes (14) peuvent être déplacées dans l'axe vertical, et
- un dispositif de transport (12), au moyen duquel le dispositif de levage (11) peut être déplacé dans l'axe horizontal,
**caractérisé par le fait que**
le dispositif de transport (12) à l'intérieur de la cellule de palettisation (1) est guidé par un dispositif de guidage (15), le dispositif de guidage (15) étant disposé entièrement à l'intérieur de la cellule de palettisation (1) et avant un dispositif de centrage (21) qui permet de compenser, lors du retour du dispositif de transport dans la cellule de palettisation (1), les défauts d'alignement du dispositif de transport qui peuvent apparaître lors des déplacements à l'extérieur de la cellule de palettisation (1).

2. Dispositif d'après la revendication 1,
**caractérisé par le fait que**
les dispositifs de levage et de transport (11, 12) marchent tout seul et sont commandés automatiquement.

3. Dispositif d'après la revendication 1 ou 2,
**caractérisé par le fait que**
le dispositif de transport (12) se déplace linéairement.

4. Dispositif d'après l'une des revendications,
**caractérisé par le fait que**
les dispositifs de levage et de transport (11, 12) peuvent accoster au moins un lieu de déposition (5, 5') à l'extérieur de la cellule de palettisation (1).

5. Dispositif d'après l'une des revendications susnommées,
**caractérisé par le fait que**
les dispositifs de levage et de transport (11, 12) peuvent accoster un poste d'attente (24) devant le poste de palettisation (4).

6. Dispositif d'après l'une des revendications susnommées,
**caractérisé par le fait que**
le dispositif de levage (11) peut soulever la palette (14, 144') dans l'axe vertical d'au moins une hauteur de couche (h).

7. Dispositif d'après l'une des revendications susnommées,
**caractérisé par le fait que**
le dispositif de levage (11) peut manier des palettes (14, 14') de tous types dans le sens longitudinal et transversal (X, Y).
